# EUROPÄISCHE PATENTANMELDUNG

(11) **EP 3 906 771 A1**
(43) Veröffentlichungstag der Anmeldung: **10.11.2021**
(21) Anmeldenummer: 21156576.7
(22) Anmeldetag: 11.02.2021
(51) Int. Cl.: A01D 69/02

(54) **LANDWIRTSCHAFTLICHE ARBEITSMASCHINE**

(30) Priorität: 07.05.2020 DE 102020112433
(71) Anmelder: CLAAS Selbstfahrende Erntemaschinen GmbH, 33428 Harsewinkel (DE)
(72) Erfinder: Sprigade, Daniel, 59427 Unna (DE); Wohlfahrt, Fabian, 33428 Harsewinkel (DE); Heymann, Philipp, 59519 Möhnesee Wamel (DE); Koch, Markus, 48369 Saerbeck (DE)
(74) Vertreter: CLAAS Gruppe

(57) **Zusammenfassung**

Die Erfindung betrifft eine landwirtschaftliche Arbeitsmaschine, insbesondere einen Mähdrescher, Feldhäcksler oder Traktor, wobei die landwirtschaftliche Arbeitsmaschine (1) eine Antriebsanordnung (10) mit einer Verbrennungskraftmaschine (11) und mit einem eine elektrische Hilfsmaschine (12) aufweisenden elektrischen Energiebereitstellungssystem (14) aufweist, und wobei die landwirtschaftliche Arbeitsmaschine (1) ein Fahrerassistenzsystem (18) mit einer Regeleinrichtung (19) aufweist, die eingerichtet ist, eine Regelung der Verbrennungskraftmaschine (11), der elektrischen Hilfsmaschine (12) und mindestens eines Leistungsverbrauchers (6, 8), der von der Antriebsanordnung (10) antreibbar ist, durchzuführen. Es wird vorgeschlagen, dass die Verbrennungskraftmaschine (11) bei niedrigstmöglicher Drehzahl (21) betreibbar ist, dass dem elektrischen Energiebereitstellungssystem (14) diese niedrigstmögliche Drehzahl (21) als Sollwert (22) vorgebbar ist, und dass das elektrische Energiebereitstellungssystem (14) eingerichtet ist, bei Zuschaltung einer Last die Verbrennungskraftmaschine (11) durch Zuschaltung der elektrischen Hilfsmaschine (12) bei dieser niedrigstmöglichen Drehzahl (21) zu unterstützen.

## Beschreibung

Die vorliegende Erfindung betrifft eine landwirtschaftliche Arbeitsmaschine gemäß dem Oberbegriff von Anspruch 1.

Der bekannte Stand der Technik (EP 3 527 353 A1), von dem die Erfindung ausgeht, betrifft eine landwirtschaftliche Arbeitsmaschine gemäß dem Oberbegriff von Anspruch 1.

Unter einer landwirtschaftlichen Arbeitsmaschine wird jegliche Form von Arbeitsfahrzeug verstanden, das mit einem eigenen Fahrantrieb (Antriebsachse insbesondere mit Antriebsrädern oder Raupenfahrwerk) versehen ist. Nur beispielhaft erwähnt seien als landwirtschaftliche Arbeitsmaschinen Mähdrescher, Feldhäcksler oder Traktoren, gegebenenfalls mit Anbauten wie Düngerstreuer, Sämaschinen, Spritzeinrichtungen, Wender, Schwader oder dergleichen.

Auf dem technischen Gebiet der Landwirtschaft ist es bekannt, verschiedene Abläufe einer landwirtschaftlichen Arbeitsmaschine automatisiert oder teilautomatisiert ablaufen zu lassen, darunter unter anderem den Betrieb und die Steuerung eines Großteils der Arbeitsaggregate der Arbeitsmaschine. Unter einem Arbeitsaggregat wird insbesondere eine landwirtschaftliche Arbeit unterstützende oder verrichtende und dadurch Leistung verbrauchende Systemkomponente der Arbeitsmaschine verstanden. Neben den vorgenannten Anbauten sind dies beispielsweise Haspel, Schneidwerk, Dreschwerk, Fördereinrichtungen (Förderschnecke oder -band), Hubwerke (Front- oder Heckhubwerk) oder dergleichen. All dies sind Leistungsverbraucher.

Während der Fahrt eines Mähdreschers durch den Feldbestand wird beispielsweise dessen Haspel und Schneidwerk betrieben. Außerdem wird das Schnittgut über Förderschnecken und -bänder durch einen Einzugskanal transportiert, wobei das Schnittgut auch ein Dreschwerk durchläuft. Die einzelnen Leistungsverbraucher werden im Bedarfsfall automatisch zugeschaltet oder getrennt. Beispielsweise ist denkbar, dass, wenn ein Mähdrescher in einen Feldbestand hineinfährt, ein Fronthubwerk mit daran angeordneter Haspel und Schneidwerk abgesenkt wird und Haspel, Schneidwerk, Förderschnecken und -bänder sowie Dreschwerk eingeschaltet werden. Beim Ausfahren aus dem Feldbestand oder bei einer Wende ist es wiederum denkbar, dass Haspel, Schneidwerk, Förderschnecken und -bänder sowie Dreschwerk ausgeschaltet und das Fronthubwerk mit daran angeordneter Haspel und Schneidwerk angehoben wird.

Die in Rede stehenden landwirtschaftlichen Arbeitsmaschinen weisen üblicherweise eine Verbrennungskraftmaschine, insbesondere einen Dieselmotor, als gemeinsamen Antrieb für die Arbeitsaggregate und den Fahrantrieb auf. Als einziger Energiespeicher dient der Verbrennungskraftmaschine ein Kraftstofftank.

Es sind auch landwirtschaftliche Arbeitsmaschinen bekannt, die neben einer als Hauptmaschine betriebenen Verbrennungskraftmaschine, auch als Primärantrieb bezeichnet, noch eine separate, elektrische Hilfsmaschine (E-Maschine) aufweisen. Diese dient in der Regel ausschließlich dazu, dass der Fahrer der landwirtschaftlichen Arbeitsmaschine im Bedarfsfall die Systemleistung kurzzeitig um die Leistungsfähigkeit der Elektromaschine steigern kann (sogenannter Boost-Betrieb). Als elektrischer Energiespeicher dient der elektrischen Hilfsmaschine beispielsweise ein Akku.

Es ist auch ein Hybridsystem bekannt, bei dem eine elektrische Hilfsmaschine Lastschwankungen bedingt durch Unterschiede in der Bestandsdichte ausgleicht. Bei einem plötzlichen Lastanstieg aufgrund einer Erhöhung der Dichte des Erntegutbestands stellt die elektrische Hilfsmaschine sofort zusätzliche Leistung zur Verfügung, wodurch die Drehzahl an einer Abtriebswelle der Verbrennungskraftmaschine weitestgehend konstant gehalten wird.

Die EP 0 631 906 A1 beschreibt außerdem für eine landwirtschaftliche Arbeitsmaschine, deren Antriebskonzept ausschließlich auf einer Verbrennungskraftmaschine beruht, bei der Durchführung eines Erntevorgangs die Drehzahl zu reduzieren, bevor ein Arbeitsaggregat, beispielsweise das Dreschwerk, zugeschaltet wird, um die Belastung der Antriebsriemen während des Zuschaltens des Arbeitsaggregats zu reduzieren.

Es ist bei alledem immer eine Herausforderung, beim Betrieb einer landwirtschaftlichen Arbeitsmaschine möglichst viel Kraftstoff einzusparen.

Der Erfindung liegt das Problem zugrunde, die bekannte landwirtschaftliche Arbeitsmaschine derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Besonders bevorzugte Ausgestaltungen sind Gegenstand der Unteransprüche.

Wesentlich ist zunächst die grundsätzliche Überlegung, bei einer landwirtschaftlichen Arbeitsmaschine den Kraftstoffverbrauch zu reduzieren, indem in bestimmten Situationen, wenn kein nennenswertes Lastaufkommen besteht, die Drehzahl der Verbrennungskraftmaschine möglichst weit gesenkt wird, und zwar auf die niedrigstmögliche Drehzahl und somit auf einen Wert deutlich unterhalb der üblichen Leerlaufdrehzahlen von landwirtschaftlichen Arbeitsmaschinen.

Die niedrigstmögliche Drehzahl ist definiert als die kleinste Drehzahl der Ausgangswelle, insbesondere der Kurbelwelle, der Verbrennungskraftmaschine, bei der die Verbrennungskraftmaschine in Betrieb gehalten werden kann, ohne unruhig zu laufen oder stehenzubleiben und ohne nennenswerte Nutzleistung abzugeben. Diese sogenannte "niedrigstmögliche Drehzahl" liegt gemäß https://de.wikipedia.org/wiki/Leerlauf bei den meisten Motoren von Kraftfahrzeugen zwischen 700 1/min und 900 1/min. Bei landwirtschaftlichen Arbeitsmaschinen liegt diese üblicherweise aber noch niedriger, beispielsweise bei 600 1/min. Damit im Leerlauf die Verbrennungskraftmaschine die Drehzahl hält und eben nicht unruhig läuft, liegt die Drehzahl im Leerlauf (Leerlaufdrehzahl) deutlich über der niedrigstmöglichen Drehzahl, bei Traktoren beispielsweise bei 800 1/min, bei Mähdreschern beispielsweise bei 1200 1/min. Hier liegt ein enormes Kraftstoffeinsparpotenzial.

Um nun zu verhindern, dass bei Zuschaltung einer Last, beispielsweise beim Einrücken des Prozessantriebs der landwirtschaftlichen Arbeitsmaschine, die Verbrennungskraftmaschine unruhig läuft oder gar stehenbleibt, ist ein weiterer wesentlicher Aspekt der vorschlagsgemäßen Lösung, dass in diesem Fall die elektrische Hilfsmaschine genutzt wird, um die Verbrennungskraftmaschine zu unterstützen. Auf diese Weise kann die Verbrennungskraftmaschine weiter konstant bei der niedrigstmöglichen Drehzahl betrieben werden. Im Stand der Technik ist dagegen als Leerlaufdrehzahl eine sehr viel höhere Drehzahl vorgesehen, beispielsweise die genannten 1200 1/min, um einen unruhigen Lauf oder ein Stehenbleiben der Verbrennungskraftmaschine zu verhindern. Eine so hohe Drehzahl führt auch zu einer deutlichen Mehrbelastung der Prozessantriebe und einer akustisch negativen Wahrnehmung für den Fahrer, was durch die vorschlagsgemäße Lösung ebenfalls vermieden wird.

Im Einzelnen wird vorgeschlagen, dass die Verbrennungskraftmaschine bei niedrigstmöglicher Drehzahl betreibbar ist, dass dem elektrischen Energiebereitstellungssystem diese niedrigstmögliche Drehzahl als Sollwert vorgebbar ist, und dass das elektrische Energiebereitstellungssystem eingerichtet ist, bei Zuschaltung einer Last die Verbrennungskraftmaschine durch Zuschaltung der elektrischen Hilfsmaschine bei dieser niedrigstmöglichen Drehzahl zu unterstützen.

Im Folgenden wird die Erfindung anhand einer lediglich Ausführungsbeispiele darstellenden Zeichnung näher erläutert. In der Zeichnung zeigt
- Fig. 1: eine schematische Seitenansicht eine vorschlagsgemäße landwirtschaftliche Arbeitsmaschine und

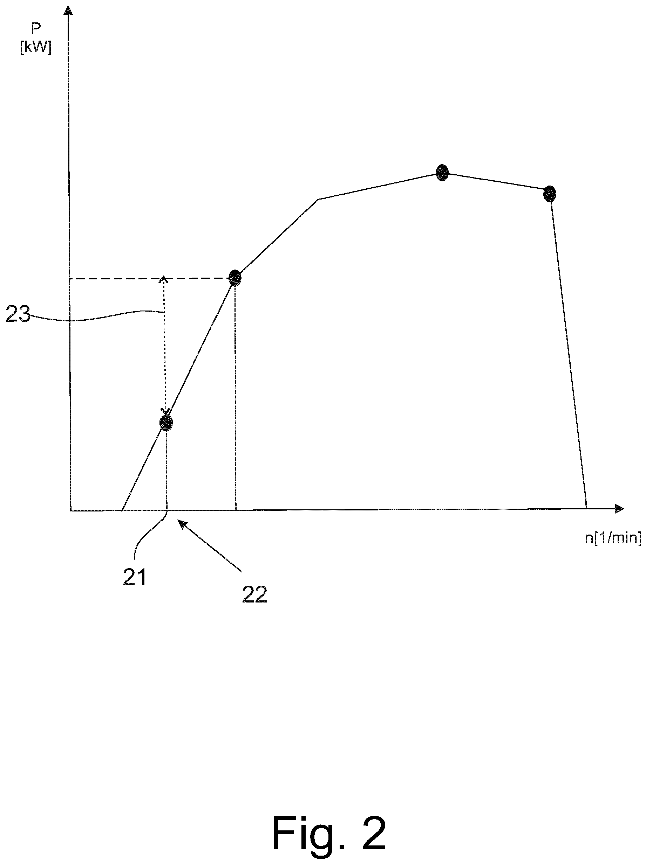

- Fig. 2: eine schematische Darstellung der Leistung der vorschlagsgemäßen landwirtschaftlichen Arbeitsmaschine in Abhängigkeit von der Drehzahl.

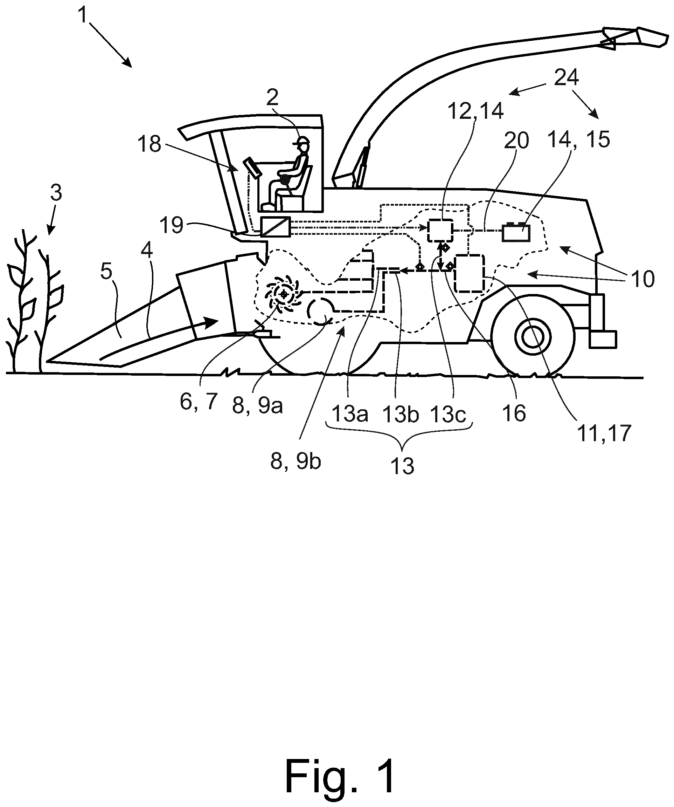

Die Zeichnung zeigt in Fig. 1 eine vorschlagsgemäße landwirtschaftliche Arbeitsmaschine 1, hier lediglich beispielhaft in Form eines Feldhäckslers. Die folgenden Ausführungen sind zwar auf einen solchen Feldhäcksler bezogen, gelten aber in entsprechender Weise auch für alle andere Arten von landwirtschaftlichen Arbeitsmaschinen 1 wie Mähdrescher oder Traktoren.

Die hier und vorzugsweise unter Anwesenheit eines Fahrers 2 in einem manuellen Arbeitsmodus manuell fahrbare und in einem Automatikmodus selbstfahrbare als Erntemaschine ausgebildete landwirtschaftliche Arbeitsmaschine 1 wird durch einen Feldbestand 3, beispielsweise ein Maisfeld, gefahren. Ein Gutfluss 4 aus Pflanzenteilen wird während des Betriebs durch einen Einzugskanal 5 eingezogen und zum Zwecke der weiteren Zerkleinerung zu einem Leistungsverbraucher 6, hier einem Arbeitsaggregat 7 in Form einer Häckslertrommel, geführt. Ein anderer Leistungsverbraucher 8 bildet einen Fahrantrieb 9a mit einer Antriebsachse für Antriebsräder.

Außerdem verfügt die landwirtschaftliche Arbeitsmaschine 1 über eine Antriebsanordnung 10, die zum einen als Hauptmaschine eine Verbrennungskraftmaschine 11, hier und vorzugsweise in Form eines Dieselmotors, und zum anderen eine elektrische Hilfsmaschine 12, hier und vorzugsweise in Form einer Elektromaschine, aufweist. Die Antriebsanordnung 10 dient sowohl zum Antrieb des Fahrantriebs 9a als auch, und zwar gleichzeitig zum Antrieb des Fahrantriebs 9a, zum Antrieb verschiedener Arbeitsaggregate 7, insbesondere über einen Prozessantrieb 9b, auch Hauptantrieb genannt. Hauptmaschine und Elektromaschine wirken also nach Art eines Hybridsystems zusammen.

Dazu ist als Bestandteil der Antriebsanordnung 10 ein von der Verbrennungskraftmaschine 11 ausgehender Antriebsstrang 13 vorgesehen, der dem Ausleiten von Antriebsleistung der Verbrennungskraftmaschine 11 an die Leistungsverbraucher 6 und 8 dient. Der Antriebsstrang 13 weist hier und vorzugweise drei Teilantriebsstränge 13a, 13b und 13c auf, in die sich dieser aufteilt. Die elektrische Hilfsmaschine 12 ist an den Antriebsstrang 13 angekoppelt, beispielsweise über ein Getriebe (nicht dargestellt).

Der erste Teilantriebsstrang 13a ist hier und vorzugsweise zum Übertragen von Antriebsleistung der Verbrennungskraftmaschine 11 an das mindestens eine Arbeitsaggregat 7 (z.B. Häckslertrommel) konfiguriert, und zwar über den Prozessantrieb 9b. Der zweite Teilantriebsstrang 13b ist hier und vorzugsweise zum Übertragen von Antriebsleistung der Verbrennungskraftmaschine 11 an den Fahrantrieb 9a konfiguriert. Der dritte Teilantriebsstrang 13c ist hier und vorzugsweise zum wechselseitigen Austausch von Antriebsleistung zwischen der Verbrennungskraftmaschine 11 und der elektrischen Hilfsmaschine 12 konfiguriert.

Die elektrische Hilfsmaschine 12, die hier als Elektromaschine ausgebildet ist, ist Bestandteil eines elektrischen Energiebereitstellungssystems 14 des Hybridsystems, das einen mit der elektrischen Hilfsmaschine 12 hier elektrisch verbundenen elektrischen Energiespeicher 15 aufweist. Die elektrische Hilfsmaschine 12 in dem dargestellten Ausführungsbeispiel kann, wenn überschüssige Leistung von der Verbrennungskraftmaschine 11 zur Verfügung steht, als elektrischer Generator betrieben werden. Insbesondere kann die elektrische Hilfsmaschine 12 den Antriebsstrang 13 jedoch unterstützen, nämlich mit zusätzlichem Drehmoment, wenn aufgrund eines Anstiegs des Leistungsbedarfs des Arbeitsaggregats 7 die Drehzahl an einer Abtriebswelle 16 der Verbrennungskraftmaschine 11 einzubrechen droht. "Unterstützen" bedeutet, dass die elektrische Hilfsmaschine 12 zusätzliches Drehmoment erzeugt, so dass sich das von der Verbrennungskraftmaschine 11 erzeugte Drehmoment und das von der elektrischen Hilfsmaschine 12 erzeugte Drehmoment an der Abtriebswelle 16 addieren.

Mit der Abtriebswelle 16 ist eine mit der Verbrennungskraftmaschine 11 verbundene Welle gemeint, auf die von der Verbrennungskraftmaschine 11 und gegebenenfalls der elektrischen Hilfsmaschine 12 ein Drehmoment übertragen wird und mittels der zumindest der Fahrantrieb 9a und, über den Prozessantrieb 9b, das Arbeitsaggregat 7 angetrieben werden. Die Abtriebswelle 16 kann entweder die Ausgangswelle der Verbrennungskraftmaschine 11 oder eine Getriebeausgangswelle eines der Verbrennungskraftmaschine 11 antriebstechnisch nachgeschalteten Getriebes 17 sein.

Die landwirtschaftliche Arbeitsmaschine 1 weist außerdem ein Fahrerassistenzsystem 18 mit einer Regeleinrichtung 19 bzw. einem sogenannten Vorfahrtregler auf, die bzw. der konfiguriert ist, eine Regelung der Verbrennungskraftmaschine 11, der elektrischen Hilfsmaschine 12 und des Fahrantriebs 9a durchzuführen.

Das in den Figuren dargestellte und insoweit bevorzugte Ausführungsbeispiel betrifft eine landwirtschaftliche Arbeitsmaschine 1, insbesondere einen Mähdrescher, Feldhäcksler oder Traktor, wobei die landwirtschaftliche Arbeitsmaschine 1 eine Antriebsanordnung 10 mit einer Verbrennungskraftmaschine 11 und mit einem eine elektrische Hilfsmaschine 12 aufweisenden elektrischen Energiebereitstellungssystem 14 aufweist und wobei die landwirtschaftliche Arbeitsmaschine 1 mindestens einen Leistungsverbraucher 6,8 aufweist, der von der Antriebsanordnung 10 antreibbar ist.

Mit der "elektrischen Hilfsmaschine" 12 ist eine elektrische Maschine gemeint, die mit der Abtriebswelle 16 der Verbrennungskraftmaschine 11 oder einer Getriebeausgangswelle eines dieser nachgeschalteten Getriebes 17 antriebstechnisch gekoppelt oder koppelbar ist, um nach Art eines Hybridsystems die Verbrennungskraftmaschine 11 elektrisch zu unterstützen. Die Verbrennungskraftmaschine 11 kann durch die elektrische Hilfsmaschine 12 zumindest antreibend, vorzugsweise wahlweise antreibend oder bremsend, unterstützt werden, das heißt, die elektrische Hilfsmaschine 12 kann zumindest als Motor, vorzugsweise wahlweise als Motor oder Generator, betrieben werden. Die im Motorbetrieb benötigte elektrische Energie bzw. die im Generatorbetrieb erzeugte Energie wird, über eine entsprechende elektrische Verbindung 20, mit dem elektrischen Energiespeicher 15 ausgetauscht.

Wesentlich ist nun, dass die Verbrennungskraftmaschine 11 bei niedrigstmöglicher Drehzahl 21 betreibbar ist, dass dem elektrischen Energiebereitstellungssystem 14 diese niedrigstmögliche Drehzahl 21 als Sollwert 22 vorgebbar ist, und dass das elektrische Energiebereitstellungssystem 14 eingerichtet ist, bei Zuschaltung 23 einer Last die Verbrennungskraftmaschine 11 durch Zuschaltung der elektrischen Hilfsmaschine 12 bei dieser niedrigstmöglichen Drehzahl 21 zu unterstützen.

"Unterstützen" bedeutet dabei, dass sich bei der niedrigstmöglichen Drehzahl 21 das von der Verbrennungskraftmaschine 11 erzeugte Drehmoment und das von der elektrischen Hilfsmaschine 12 erzeugte Drehmoment addieren.

Die niedrigstmögliche Drehzahl 21 als Sollwert 22 vorzugeben bedeutet, dass dem elektrischen Energiebereitstellungssystem 14, insbesondere einer Steuer- und Regelungseinheit 24 des elektrischen Energiebereitstellungssystems 14, ein Sollwert 22 für die Drehzahl der Ausgangswelle, insbesondere der Kurbelwelle, der Verbrennungskraftmaschine 11 vorgegeben wird. Die elektrische Hilfsmaschine 12 unterstützt die Verbrennungskraftmaschine 11 dann so, dass die niedrigstmögliche Drehzahl 21 bei Zuschaltung besagter Last konstant beibehalten wird. Der Sollwert 22 kann dem elektrischen Energiebereitstellungssystem 14 vom Benutzer oder der Regeleinrichtung 19 des Fahrerassistenzsystems 18 vorgegeben werden.

Bei dem in den Figuren dargestellten und insoweit bevorzugten Ausführungsbeispiel ist ferner vorgesehen, dass die Zuschaltung 23 der Last ein Einrücken des Prozessantriebs 9b ist, vorzugsweise, dass das Einrücken des Prozessantriebs 9b durch ein Spannen eines Antriebsriemens zwischen einer Abtriebswelle 16 der Verbrennungskraftmaschine 11 und dem Prozessantrieb 9b oder durch ein Einkuppeln zwischen einer Abtriebswelle 16 der Verbrennungskraftmaschine 11 und dem Prozessantrieb 9b mittels einer Kupplung durchführbar ist.

Mit dem Einrücken des Prozessantriebs 9b ist gemeint, dass der vom Antriebsstrang 13 entkoppelte Prozessantrieb 9b mit dem Antriebsstrang 13 so gekoppelt wird, dass eine Drehmomentübertragung von der Abtriebswelle 16 der Verbrennungskraftmaschine 11 an den Prozessantrieb 9b möglich ist. Das Einrücken mittels Antriebsriemen stellt dabei eine besonders einfache Variante dar. Das Einrücken mittels Kupplung ist besonders sanft und damit auch besonders komfortabel und verschleißfreundlich.

Weiter ist hier und vorzugsweise vorgesehen, dass die Zuschaltung 23 der Last ein Zuschalten des Fahrantriebs 9a ist, oder, dass die Zuschaltung 23 der Last ein Anfahren der landwirtschaftlichen Arbeitsmaschine 1 ist, oder, dass die Zuschaltung 23 der Last eine Betätigung der Korntankentleerung der landwirtschaftlichen Arbeitsmaschine 1 ist.

Auch das Zuschalten des Fahrantriebs 9a und/oder das Anfahren der landwirtschaftlichen Arbeitsmaschine 1 und/oder die Betätigung der Korntankentleerung kann dadurch zumindest im Wesentlichen bei besagter niedrigstmöglicher Drehzahl 21 erfolgen.

Darüber hinaus ist hier und vorzugsweise vorgesehen, dass die Zuschaltung 23 der Last bei der Durchführung eines landwirtschaftlichen Arbeitsauftrags erfolgt, insbesondere bei der Abarbeitung der Vorgewendesequenz oder bei Stillstand mit eingerücktem Prozessantrieb 9b.

Mit dem landwirtschaftlichen Arbeitsauftrag ist insbesondere ein Erntevorgang, Bodenbearbeitungsvorgang, Düngevorgang etc. gemeint.

Mit der Vorgewendesequenz ist eine bestimmungsgemäße Abfolge der Arbeitsvorgänge beim Durchfahren des Vorgewendes gemeint.

Weiterhin wird hier und vorzugsweise vorgesehen, dass die niedrigstmögliche Drehzahl 21 höchstens 1200 1/min, weiter vorzugsweise höchstens 900 1/min, weiter vorzugsweise höchstens 700 1/min, vorzugsweise höchstens 650 1/min, weiter vorzugsweise höchstens 620 1/min, beträgt.

### Bezugszeichenliste

- 1: Landwirtschaftliche Arbeitsmaschine
- 2: Fahrer
- 3: Feldbestand
- 4: Gutfluss
- 5: Einzugskanal
- 6: Leistungsverbraucher
- 7: Arbeitsaggregat
- 8: Leistungsverbraucher
- 9a: Fahrantrieb
- 9b: Prozessantrieb
- 10: Antriebsanordnung
- 11: Verbrennungskraftmaschine
- 12: Elektrische Hilfsmaschine
- 13: Antriebsstrang
- 13a: Erster Teilantriebsstrang
- 13b: Zweiter Teilantriebsstrang
- 13c: Dritter Teilantriebsstrang
- 14: Elektrisches Energiebereitstellungssystem
- 15: Elektrischer Energiespeicher
- 16: Abtriebswelle
- 17: Antriebstechnisch nachgeschaltetes Getriebe
- 18: Fahrerassistenzsystem
- 19: Regeleinrichtung
- 20: Elektrische Verbindung
- 21: Niedrigstmögliche Drehzahl
- 22: Sollwert
- 23: Zuschaltung
- 24: Steuer- und Regelungseinheit

## Patentansprüche

1. Landwirtschaftliche Arbeitsmaschine, insbesondere Mähdrescher, Feldhäcksler oder Traktor, wobei die landwirtschaftliche Arbeitsmaschine (1) eine Antriebsanordnung (10) mit einer Verbrennungskraftmaschine (11) und mit einem eine elektrische Hilfsmaschine (12) aufweisenden elektrischen Energiebereitstellungssystem (14) aufweist, und wobei die landwirtschaftliche Arbeitsmaschine (1) ein Fahrerassistenzsystem (18) mit einer Regeleinrichtung (19) aufweist, die eingerichtet ist, eine Regelung der Verbrennungskraftmaschine (11), der elektrischen Hilfsmaschine (12) und mindestens eines Leistungsverbrauchers (6, 8), der von der Antriebsanordnung (10) antreibbar ist, durchzuführen,
**dadurch gekennzeichnet,**
**dass** die Verbrennungskraftmaschine (11) bei niedrigstmöglicher Drehzahl (21) betreibbar ist, dass dem elektrischen Energiebereitstellungssystem (14) diese niedrigstmögliche Drehzahl (21) als Sollwert (22) vorgebbar ist, und dass das elektrische Energiebereitstellungssystem (14) eingerichtet ist, bei Zuschaltung (23) einer Last die Verbrennungskraftmaschine (11) durch Zuschaltung der elektrischen Hilfsmaschine (12) bei dieser niedrigstmöglichen Drehzahl (21) zu unterstützen.

2. Landwirtschaftliche Arbeitsmaschine nach Anspruch 1, **dadurch gekennzeichnet, dass** die Zuschaltung (23) der Last ein Einrücken des Prozessantriebs (9b) ist, vorzugsweise, dass das Einrücken des Prozessantriebs (9b) durch ein Spannen eines Antriebsriemens zwischen einer Abtriebswelle (16) der Verbrennungskraftmaschine (11) und dem Prozessantrieb (9b) oder durch ein Einkuppeln zwischen einer Abtriebswelle (16) der Verbrennungskraftmaschine (11) und dem Prozessantrieb (9b) mittels einer Kupplung durchführbar ist.

3. Landwirtschaftliche Arbeitsmaschine nach Anspruch 1 oder 2, **dadurch gekennzeichnet, dass** die Zuschaltung (23) der Last ein Zuschalten des Fahrantriebs (9a) ist, oder, dass die Zuschaltung (23) der Last ein Anfahren der landwirtschaftlichen Arbeitsmaschine (1) ist, oder, dass die Zuschaltung (23) der Last eine Betätigung der Korntankentleerung der landwirtschaftlichen Arbeitsmaschine (1) ist.

4. Landwirtschaftliche Arbeitsmaschine nach einem der vorhergehenden Ansprüche, **dadurch gekennzeichnet, dass** die Zuschaltung (23) der Last bei der Durchführung eines landwirtschaftlichen Arbeitsauftrags erfolgt, insbesondere bei der Abarbeitung der Vorgewendesequenz oder bei Stillstand mit eingerücktem Prozessantrieb (9b).

5. Landwirtschaftliche Arbeitsmaschine nach einem der vorhergehenden Ansprüche, **dadurch gekennzeichnet, dass** die niedrigstmögliche Drehzahl (21) höchstens 1200 1/min, weiter vorzugsweise höchstens 900 1/min, weiter vorzugsweise höchstens 700 1/min, vorzugsweise höchstens 650 1/min, weiter vorzugsweise höchstens 620 1/min, beträgt.
